# EUROPÄISCHE PATENTSCHRIFT

(11) **EP 2 054 216 B1**
(45) Veröffentlichungstag und Bekanntmachung des Hinweises auf die Patenterteilung: **19.12.2012**
(21) Anmeldenummer: 07801208.5
(22) Anmeldetag: 06.08.2007
(51) Int. Cl.: B29C 67/00, B29K 105/16, B29K 33/04

(54) **SELBSTAUSHÄRTENDES MATERIAL UND VERFAHREN ZUM SCHICHTWEISEN AUFBAU VON MODELLEN**
SELF-CURING MATERIAL AND PROCESS FOR THE LAYERWISE CONSTRUCTION OF MODELS
MATÉRIAU AUTO-DURCISSANT ET PROCÉDÉ DE CONSTRUCTION DE MODÈLES PAR STRATIFICATION DE COUCHES

(30) Priorität: 20.08.2006 DE 102006038858
(43) Veröffentlichungstag der Anmeldung: 06.05.2009
(73) Patentinhaber: Voxeljet Technology GmbH, 86316 Friedberg (DE)
(72) Erfinder: KASHANI-SHIRAZI, Kaveh, 80807 München (DE)
(74) Vertreter: Wagner, Sigrid
(86) Internationale Anmeldenummer: PCT/DE2007/001372
(87) Internationale Veröffentlichungsnummer: WO 2008/022615

(56) Entgegenhaltungen:
- US-A1- 2004 038 009
- US-A1- 2005 093 194

## Beschreibung

Die vorliegende Erfindung bezieht sich auf ein selbst aushärtendes Material und ein Verfahren zum schichtweisen Aufbau dreidimensionaler Bauteile.

Verfahren zur Herstellung dreidimensionaler Bauteile sind schon seit längerer Zeit bekannt.

Beispielsweise wird in der europäischen Patentschrift EP 0 431 924 B1 ein Verfahren zur Herstellung dreidimensionaler Objekte aus Computerdaten beschrieben. Dort wird beschrieben, dass ein Partikelmaterial in einer dünnen Schicht auf eine Plattform aufgetragen und selektiv mittels eines Druckkopfes mit Binder bedruckt wird. Der bedruckte Bereich verklebt und verfestigt sich unter dem Einfluss des Binders. Die Plattform wird um eine Schichtdicke abgesenkt und mit einer neuen Schicht Partikelmaterial versehen, die ebenfalls bedruckt wird. Diese Schritte werden wiederholt, bis eine gewisse Höhe erreicht ist. Aus den bedruckten und verfestigten Bereichen entsteht so ein dreidimensionales Objekt. Dieses Objekt ist in losem Partikelmaterial eingebettet und wird entnommen und von losem Partikelmaterial befreit.

Bei diesen Verfahren wurde beobachtet, dass die gedruckten Objekte beim Bau beziehungsweise nach dem Bau auf Grund von Schwund bei ungleichmäßiger Aushärtung einen starken Verzug aufweisen und damit die Ungenauigkeitstoleranzen der geformten Bauteile relativ hoch sind.

US 2004 038009 offenbart ein Materialsystem gemäβ dem Oberbegriff des Anspruchs 1 und ein Verfahren gemäβ dem Oberbegriff des Anspruchs 12. Ein Gegenstand der vorliegenden Erfindung ist ein selbst-aushärtendes Material zum schichtweisen Aufbau dreidimensionaler Bauteile, gemäβ dem Anspruch 1.

Mit einem solchen Material ist es nun möglich, dass die zuerst gebauten, unten liegenden Schichten sich erst nach einer gewissen Zeit verfestigen und zusammenziehen. Darüber liegende bedruckte Schichten härten nicht wesentlich später aus. Es entsteht durch das im Wesentlichen gleichzeitige Aushärten keine Spannung im bedruckten Bereich und daher auch kein wesentlicher Verzug oder Wölbung.

Ein selbst aushärtendes System im Sinne der Erfindung bezeichnet ein Bindersystem, das ohne fremde Einwirkung (in Form von Temperatur, Energiezugabe,...) binnen 72 Stunden oder schneller aushärten kann. Die dazu benötigte Zeit wird als Verfestigungsdauer bezeichnet.

Dabei ist nicht eine vollständige Aushärtung gemeint. Eine Grünteilfestigkeit ist ausreichend, bei der die Bauteile formstabil sind aber noch keine externen Kräfte standhalten. Das heißt, die Bauteile sollen in der Lage sein ihr Eigengewicht zu tragen. Ein großer Teil (>50%) des Schwundes, der bei der Verfestigung geschieht, findet dieser Zeit statt.

Um eine verzögerte Aushärtung im Sinne der Erfindung handelt es sich wenn weniger als 5% der Verfestigung und somit der Schrumpfung innerhalb einer Schicht geschieht bevor die nächste Schicht aufgetragen wird.

Ein weiterer Gegenstand der vorliegenden Erfindung ist ein Verfahren zum schichtweisen Aufbau dreidimensionaler Bauteile, gemäβ dem Anspruch 12.

Dadurch, dass der Zeitpunkt der Verfestigung und somit das Eintreten der Verfestigung und des Schwundes verzögert wird, erreicht man ein quasi - relativ zur Zeit gesehen - gleichzeitiges Einwirken des Binders im gesamten Bauteil. Als Folge dessen schrumpft das Bauteil überall gleichmäßig und zur selben Zeit, so dass kein Verzug entsteht. Spannungen durch während der Bauphase entstehenden Schwund können im weichen, noch nicht ausgehärteten Bauteil ausgeglichen werden.

Der gleichmäßige Schwund kann, ähnlich wie dies bei Gussmodellen geschieht, durch das Aufskalieren des CAD-Modells mittels eines Skalierungsfaktors ausgeglichen werden. Schwindet das Bauteil bei der Verfestigung um einen Faktor x, so muss das Modell um den Selben Faktor x größer gebaut werden. Nach prozessbedingtem Schrumpfen weist es schließlich die richtige Größe auf.

Die Reaktions- bzw. Aushärtungsgeschwindigkeit ist abhängig von der Zeit, die benötigt wird, um eine Schicht zu beschichten und zu bedrucken, und die Höhe einer Schicht. Es ist meist nicht notwendig, die Aushärtung so lange zu verzögern bis das gesamte Modell gebaut ist. Gemäβ der Erfindung ist eine Verzögerung der Verfestigung um die Bauzeit von mindestens 20 Schichten ausreichend.

Als besonders vorteilhaft hat es sich erwiesen, wenn das Bauteil nach spätestens 48 Stunden eine Grünteilfestigkeit aufweist.

Der optimale Wert der Verzögerung, so dass kein Verzug mehr entsteht, kann von einem Fachmann durch einfache Versuche (Druck und Vermessung eines Probekörpers) je nach Bauteil und verwendetem Material, bestimmt werden.

Häufig kann eine Verzögerung der Verfestigung um die Bauzeit für 150 Partikelschichten ausreichend sein.

Je nach Bauteil und verwendetem Material kann es gemäß einer bevorzugten Ausführungsform jedoch auch vorteilhaft sein, wenn das Aushärten bzw. Verfestigen erst nach vollständigem Aufbau des Bauteiles erfolgt.

Eine Verzögerung der Verfestigung kann beispielsweise durch Absenken der Temperatur beim Bauprozess erfolgen.

Gemäß einer weiteren Ausführungsform der vorliegenden Erfindung kann es ebenfalls vorteilhaft sein, wenn reaktionshemmende Zusatzstoffe dem Bindemittel bzw. Partikelmaterial zugesetzt werden.

Weiterhin könnte auch ein langsam wirkender Binder verwendet werden.

Mit einem erfindungsgemäßen Material bzw. Verfahren ist es nun möglich Baumaterialien zu verwenden, die bisher auf Grund ihrer Neigung zum Schwund als ungeeignet galten.

Unter Bindemittel bzw. Binder wird im Sinne dieser Anmeldung jegliche Substanz verstanden, die das Partikelmaterial verkleben und zu einer zusammenhängenden Struktur verfestigen kann. Dazu eignen sich verschiedene Materialien und Reaktionsmechanismen. Insbesondere müssen Binder und Partikelmaterial ein geeignetes System sein.

Beispielhaft sollen im Folgenden einige Materialien und deren Reaktionsmechanismen aufgezählt werden:
- Monomere Bindersysteme auf Basis von Acrylaten, Methacrylaten, Styrolen, vernetzt oder unvernetzt, deren Polymerisation durch UV-Licht, Strahlung, Wärme, reaktive Aktivatoren ausgelöst wird,
- Mehrkomponentenklebesysteme wie Polyurethanharze oder Epoxidharze, bei denen die Vernetzung durch die Reaktion der 2 Komponenten stattfindet,
- Substanzen, die das Partikelmaterial oder einen Teil davon anlösen und derart verkleben.

Das Bindemittel kann ferner verschiedene Lösungsmittel und/oder Monomere enthalten, Vernetzer, und/oder Reaktionshilfsstoffe wie Verzögerer, Katalysatoren, Füllstoffe (z. B. Nanopartikel) aufweisen. Zu Verbesserung der Druckeigenschaften können dem Binderfluid noch weitere Hilfsstoffe z. B. zur Modifikation der Viskosität zugefügt werden.

Gemäß einer besonders bevorzugten Ausführungsform der Erfindung kann das Partikelmaterial Füllstoffe aufweisen, um eine Schwindung des aufgebauten Bauteiles zu minimieren oder die Materialeigenschaften zu verbessern.

Des Weiteren können Hilfsstoffe wie Initiatoren, Katalysatoren, Verzögerer dem Partikelmaterial zugesetzt sein, die z.B. für die Reaktion des Binders benötigt werden.

In einer besonderen Ausführungsform des Verfahrens wird die Verklebung der Partikel des Partikelmaterials durch Lösungsmittel erzielt.

Besonders vorteilhaft stellt sich bei einer derartigen bevorzugten Ausführungsform die Verwendung eines gut löslichen Kunststoffes wie zum Beispiel Polyethylmethacrylat als Partikelmaterial heraus.

Das Bindemittel kann Lösungsmittel, wie Alkohole, Ketone, Acetate aufweisen. Es kann auch ein Gemisch aus verschiedenen Lösungsmitteln aufweisen.

Da das Bindemittel ein Lösungsmittel aufweist, entstehen auch keine Probleme bei den Vorrichtungen zum Bereitstellen und eindosieren des Binders, da bspw. Druckköpfe nicht verstopfen.

Die bindende Wirkung des Lösungsmittels beruht gemäß dieser bevorzugten Ausführungsform darauf, dass die Körner des Partikelmaterials in den bedruckten Bereichen angelöst werden und mit einander verkleben. Entweicht das Lösungsmittel, verfestigen sich die Kontaktstellen der Körner und es entsteht ein zusammenhängender Bereich. Dabei kann in manchen Fällen ein Schwund im Material feststellt werden.

Da eine Verfestigung und Schrumpfung mit dem Verdunsten des Lösungsmittels einhergeht, kann man durch eine Verzögerung des Verdampfens eine gleichmäßigere Verfestigung innerhalb des Bauteils und somit die Verminderung des Verzugs erreicht werden.

In einer besonderen Ausführungsform des Verfahrens wird dies durch eine Steuerung und insbesondere Absenkung der Prozesstemperatur erreicht.

In einer weiteren besonderen Ausführungsform des Verfahrens verhindert man durch die Zugabe eines Feuchthaltemittels wie zum Beispiel Monoethylenglycol das Entweichenn des Alkohols.

Als besonders vorteilhafte Lösung hat sich die Variation des Lösungsmittels herausgestellt. Da höherwertige Alkohole (n-Butanol, Pentanol, Hexanol, ...) höhere Siedepunkte und einen niedrigeren Dampfdruck besitzen, kann durch deren Einsatz auf einfache und effektive Weise das Abdampfen vermindert werden.

Bei einer Prozesstemperatur von bspw. 20°C und der Verwendung eines Polyethylmethacrylat aufweisendes Partikelmaterial konnten mit Pentanol als Lösungsmittel sehr gute Ergebnisse erzielt werden. Das Lösungsmittel kann gemäß einer bevorzugten Ausführungsform mit einem Drop-On-Demand-Druckkopf auf die vorab aufgebrachte Partikelschicht gedruckt bzw. aufgetragen werden. Die eindosierte Menge Pentanol entspricht beispielsweise etwa 9 gew. % des Partikelmaterials. Auf solche Weise hergestellte Bauteile weisen keinen messbaren Verzug auf. Die Festigkeiten der Bauteile liegen höher als bei bekannten Verfahren. Da hier nur ein einfaches Kunststoffpulver und Alkohol als Lösungsmittel verwendet werden, sind auch die Materialkosten gering.

Die Bauteile können nach ihrer Fertigstellung entweder im Pulverbett oder einzeln, bei Raumtemperatur oder bei bestimmten Temperaturen getrocknet werden.

Werden die Bauteile vor dem Trocknen aus dem Pulverbett genommen, ist darauf zu achten, dass durch ein ungleichmäßiges Trocknen nach dem Bauen ein Verzug entstehen kann. Ein Bauteil kann zum Beispiel ungleichmäßig austrocknen, wenn es mit der Unterseite auf einer undurchlässigen Oberfläche aufliegt. Die Unterseite bleibt derart u.U. länger feucht und kann schließlich beim Trocknen zu einem Verzug des Bauteiles führen.

Es kann also für verzugsfreie Bauteile vorteilhaft sein, dass sie nach dem Bauen gleichmäßig austrocknen können.

Weiterhin können die noch feuchten, empfindlichen Bauteile bei der Entnahme beschädigt werden oder sich beim Trocknen durch ihr eigenes Gewicht verziehen.

In einer bevorzugten Ausführungsform der Erfindung geschieht die Trocknung dadurch, dass das Bauteil nach dem Drucken für einige Zeit im losen Pulverbett und von Pulver bedeckt gelassen wird bis es genügend getrocknet ist. Dabei ist darauf zu achten, dass das Pulverbett eine genügend hohe Permeabilität für das Lösungsmittel besitzt.

Ist das Partikelmaterial selbst in der Lage, das Lösungsmittel zu transportieren, so können die Bauteile weitestgehend oder vollständig im Pulverbett getrocknet werden können. Dabei diffundiert das Lösungsmittel im Pulverbett von Korn zu Korn. Wichtig ist, dass das Partikelmaterial im Lösungsmittel löslich ist.

Im Sinne der Erfindung kann aber auch der Füllstoff so gewählt werden, dass er zumindest teilweise das Lösungsmittel aufnimmt und/oder leitet.

Darüber hinaus könnte das Lösungsmittel auch so gewählt werden, dass es vom Füllstoff ausreichend aufgenommen und/oder geleitet wird.

Bei der Verwendung von Lösungsmittel als Bindemittel zum Verkleben des Partikelmaterials kann nur eine begrenzte Festigkeit der Bauteile erzielt werden, da nach Entweichen des Lösungsmittels ein poröser Körper verbleibt.

Um noch höhere Festigkeiten zu erreichen kann es gemäß einer bevorzugten Ausführungsform vorteilhaft sein zusätzliches Material in Form eines Binders in das Pulverbett einzubringen.

Nahezu alle für das Verfahren geeigneten Binder weisen bei der Verfestigung ein Volumenschwund auf. Zum Beispiel wird bei der Verfestigungsreaktion von radikalisch polimerisierten Bindern die Doppelbindung der Monomere gespalten und bildet eine Bindung zum nächsten Monomer. Die Abstände der Moleküle sinken wenn sie zu einem solchen Makromolekül polymerisieren, was sich makroskopisch als Volumenschwund auswirkt. Bei der Polymerisation von monomeren Methylmethacrylat zu Polymethylmethacrylat ist zum Beispiel ein Volumenschwund von 21% zu beobachten.

Bei einer besonders vorteilhaften Ausführungsform des Verfahrens wird ein Binder auf Basis von verschiedenen Methacrylaten und/oder Styrolen verwendet, der beispielsweise selektiv mittels Piezodruckköpfen auf eine Pulverschicht aufgetragen werden könnte.

Das Bindemittel könnte neben einem Monomer auch einen Vernetzer (z.B. Mehrfunktionelle Methacrylate) aufweisen. Desweiteren könnte auch ein Katalysator (Toluidin) und/oder ein Verzögerer (Chinon) verwendet werden.

Weitere Zusätze und Reaktionshilfsmittel sind denkbar. Ein Fachmann kann durch Modifikation der Zusammensetzung des das Bindemittel aufweisende Material gezielt die Eigenschaften des Binders und somit des Bauteils einstellen.

Des Weiteren sind Zusätze zur Erhöhung oder Senkung der Viskosität, Oberflächenspannung und/oder anderer auf die Druckbarkeit Einfluss nehmender Eigenschaften der Binderflüssigkeit möglich. Hierdurch könnte die Druckbarkeit des Binders verbessert werden.

Das Partikelmaterial kann gemäß einer bevorzugten Ausführungsform der der vorliegenden Erfindung ein Perlpolymerisat auf Basis von PMMA aufweisen. Andere Materialien wie ABS, PC-ABS, PA, PBT, Metalle wären ebenso einsetzbar.

Desweiteren kann das Partikelmaterial Füllstoffe wie Glas, Metalle, Kurzfasern aufweisen.

Vorteilhafterweise kann das Partikelmaterial einen Reaktionsinitiator (z. B. Benzoylperoxid) aufweisen. Ein solcher Initiator könnte entweder unter das Partikelmaterial gemischt werden oder in den Körnern des Partikelmaterials gelöst sein.

Wird ein das Bindemittel aufweisendes Druckfluid auf ein Partikelmaterial gedruckt, startet gemäß der beschriebenen bevorzugten Ausführungsform eine Reaktion zwischen dem im Pulver befindlichen Initiator (BPO) und dem im Fluid befindlichen Katalysator (Toluidin). Es bilden sich Radikale, die eine Verkettungsreaktion des Monomers auslösen.

Versuchsergebnisse haben gezeigt, dass sich mit einem solchen System Bauteile mit hoher Festigkeit im 3D-Druckverfahren herstellen lassen.

Um jedoch wieder einen Verzug zu vermeiden, wird beim Verfahren im Sinne der Erfindung die Polymerisationsreaktion verzögert.

Die Verzögerung kann auf unterschiedliche Weise erfolgen. Dabei können auch mehrere Effekte genutzt werden, um die Reaktionskinetik so zu steuern, dass verzugsfreie Bauteile entstehen.

Eine Auswahl von besonders vorteilhaften Möglichkeiten wird nachfolgend beschrieben:
- Die Menge und Art des Initiators (z.B. Benxoylperoxid) bestimmt die Geschwindigkeit der Polymerisation. Durch einen 4-fachen Gehalt an Initiator kann die Reaktionsgeschwindigkeit verdoppelt werden. Verschiedene Initiatoren besitzen unterschiedliche Zerfallsraten und eine unterschiedliche Effektivität beim Starten der Polymerisationsreaktion. Typische Mengen an Initiator sind unter 5% der eindosierten Monomermenge. Günstiger können Zugabemengen zwischen 0,1 und 2%, bezogen auf das eindosierte Monomer sein.
- Durch Zugabe verschiedener Mengen Katalysator (z.B. Toluidin) kann die Reaktionsgeschwindigkeit gesteuert werden. Dabei ergeben höhere Katalysatormengen eine schnellere Polymerisationsreaktion. Günstig sind Zugabemengen von bis zu 5%. Noch günstiger sind Zugabemengen zwischen 0,1 und 1%, bezogen auf das eindosierte Monomer.
- Der Initiator (z. B. Benzoylperoxid) kann entweder dem Partikelmaterial zugefügt werden oder sich in dem Korn gelöst befinden. Die Polymerisationsreaktion wird verzögert wenn sich der Initiator im Korn befindet, da dann das Korn zunächst angelöst und der Initiator ausgeschwemmt werden muss, bevor eine Verkettungsreaktion starten kann. Dabei entscheidet die Löslichkeit des Partikelmaterials, die Aggressivität des Monomers und die Prozesstemperatur über die Geschwindigkeit des Anlösens.
- Über eine geeignete Auswahl der Monomere kann ein Fachmann die Reaktionsgeschwindigkeit steuern. Unterschiedliche Monomere weisen verschiedene Reaktionsgeschwindigkeiten auf. Zusätzlich ist es möglich, durch die Verwendung einer Kombination verschiedener Monomere in einem Bindersystem (z.B. Copolymerisation von Styrol und Methylmethacrylat) eine beschleunigte Reaktion im Vergleich zu einem einkomponentigen System zu erzielen.
- Die Temperatur, bei der die Polymerisation abläuft, bestimmt die Reaktionsgeschwindigkeit. Höhere Temperaturen steigern die Beweglichkeit der Moleküle. Dadurch können Sie schneller ihre Reaktionspartner finden und die Polymerisationsgeschwindigkeit steigt.
- Eine weitere Möglichkeit die Reaktion zu Verzögern ist die Verwendung einer Substanz, die die Reaktion verlangsamt. Besonders vorteilhaft erweisen sich solche Materialien, die zwar die Polymerisationsreaktion zeitlich verzögern, jedoch nicht die Reaktivität des Systems dämpfen. Ein solcher Verzögerer ist z. B. Benzochinon. Verzögerer, die die Reaktion generell verlangsamen, führen dazu, dass eventuell nicht alles Monomer umgesetzt wird. Nicht ausreagiertes Restmonomer ist ungünstig, da dadurch die Festigkeit der Bauteile sinkt. Durch Verzögerer erster Art ist dies nicht der Fall.

Die oben genannten Möglichkeiten stellen nur eine Auswahl dar. Ein Fachmann kann durch geeignete Kombination der oben genannten Methoden die Reaktionskinetik an die Anforderungen des Verfahrens anpassen.

Bei der Einstellung der Reaktionsgeschwindigkeit im Sinne der Erfindung muss darauf geachtet werden, dass die Polymerisation langsam genug stattfindet, dass sich der auftretende Schwund sich nicht in Verzug des Bauteils auswirkt. Im Allgemeinen wird dies erreicht, in dem die Reaktionszeit größer ist als die Zeit, die der 3D-Drucker benötigt um das Bauteil aufzubauen.

In einer besonderen Ausführungsform der vorliegenden Erfindung wird dem Partikelmaterial ein Verdickungsmittel zugesetzt, dass schnell von der Flüssigkeit aufgenommen wird und dabei deren Viskosität erhöht. Dadurch sinkt die Neigung der Flüssigkeit, im Pulverbett zu sickern, und die Geometrie der Bauteile wird genau abgebildet.

Besonders Vorteilhaft ist es, wenn die Verdickung durch das Partikelmaterial selbst oder einen ihrer Komponenten geleistet wird. In einer bevorzugten Ausführungsform der Erfindung wird dies erreicht, in dem ein im Druckfluid lösliches Material (Polymer) verwendet wird, das sich im Druckfluid löst und deren Viskosität steigert. Dabei reichen schon geringe Mengen an Polymerpulver aus, das Fluid ausreichend abzubinden.

Weitere vorteilhafte Ausgestaltungen der vorliegenden Erfindung ergeben sich aus den Unteransprüchen sowie deren Beschreibung.

### Zeichnungen:

Zur näheren Erläuterung wird die Erfindung anhand bevorzugter Ausführungsbeispiele nachfolgend unter Bezugnahme auf die Zeichnung näher beschrieben.

In der Zeichnung zeigt dabei:
Figur 1 die Abfolge eines erfindungsgemäßen Verfahrens gemäß einer bevorzugten Ausführungsform;
Figur 2 die Auswirkung von Schwund bei verschiedenen Verfestigungsgeschwindigkeiten;
Figur 3 die Trocknung der Bauteile im Pulverbett;

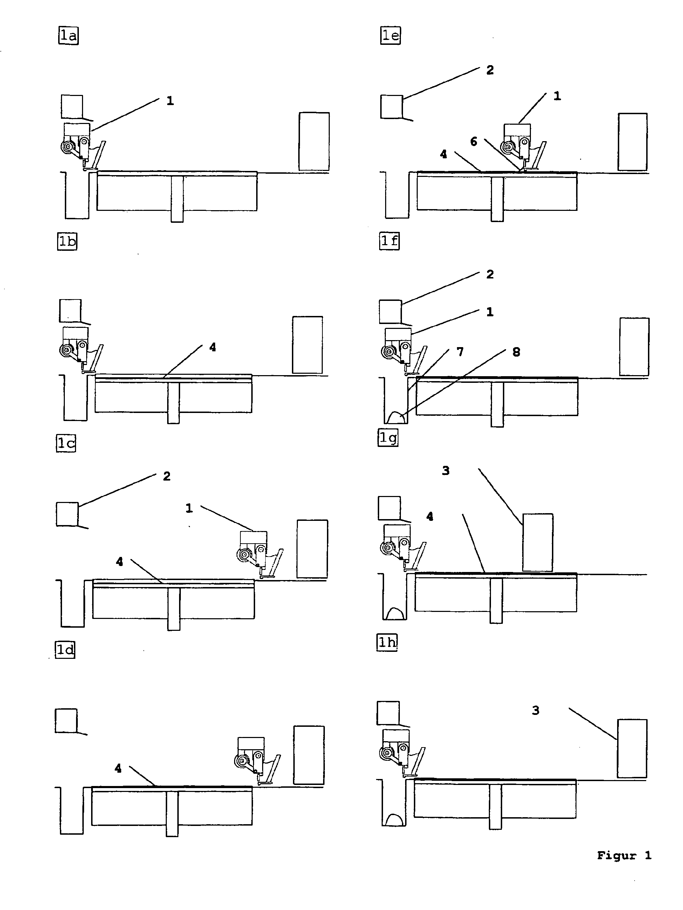

Bezug nehmend auf Figur 1 wird im Folgenden die Abfolge des Druckens gemäß einer bevorzugten Ausführungsform des erfindungsgemäßen Verfahrens für den Einsatz beim schichtweisen Aufbau von Modellen aus Partikelmaterial und Bindemittel bei einem Rapid-Prototyping-Verfahren beschrieben.

Gemäß der beschriebenen bevorzugten Ausführungsform weist das Partikelmaterial Polyethylmethacrylat und das Bindemittel 1-Pentanol auf.

Beim Aufbau eines Bauteiles, wie beispielsweise eines Gussmodells, wird eine Bauplattform 4, auf der das Modell aufgebaut werden soll, um eine Schichtstärke des Partikelmaterials 5 abgesenkt. Danach wird das Partikelmaterial 5, beispielsweise das sehr feine und alkohollösliche Kunststoffpulver auf Basis von Polyethylmethacrylat, mit Hilfe eines Beschichters 1 in einer gewünschten Schichtstärke auf die Bauplattform 4 aufgetragen. Danach schließt sich das selektive Auftragen von Bindemittel, zum Beispiel Pentanol, auf auszuhärtende Bereiche an. Dies kann beispielsweise mittels eines Drop-on-demand-Tropfenerzeugers 3, nach Art eines Tintenstrahldruckers, durchgeführt werden. Diese Auftragungsschritte werden wiederholt, bis das fertige Bauteil, eingebettet in loses Partikelmaterial 5 erhalten wird.

Am Anfang steht der Beschichter 1 in der Ausgangslage, was in Figur 1a dargestellt ist.

Wie in Figur 1b dargestellt ist, wird im Folgenden zum Aufbau eines Modells die Bauplattform 4 um mehr als eine Schicht abgesenkt.

Danach fährt der Beschichter 1, wie in Figur 1c gezeigt, ohne Partikelmaterial auszustoßen in die Position gegenüber der Befüllvorrichtung 2, bis er über dem Rand der Bauplattform 4 steht.

Nun wird die Bauplattform 4 genau auf Schichthöhe angehoben, was aus Figur 1d ersehen werden kann. Das heißt, dass die Bauplattform 4 nun genau um eine Schichthöhe abgesenkt ist.

Anschließend fährt der Beschichter 1 in konstanter Fahrt über die Bauplattform 4. Dabei gibt er Partikelmaterial 5 in genau der richtigen Menge ab und beschichtet die Bauplattform 4. Dies ist in Figur 1e gezeigt.

Der Beschichter 1 fährt nach der Beschichtungsfahrt ohne Schwingbewegung in Eilfahrt zur Ausgangsposition zurück und kann bei Bedarf über die Befüllvorrichtung 2 neu befüllt werden. Dies ist in Figur 1f gezeigt.

Der Druckkopf 3 Überfährt nun die Bauplattform 4 und dosiert dabei den Binder selektiv an den Stellen ein, wo eine Aushärtung erzielt werden soll. Dies ist in Figur 1g dargestellt.

Nachdem der Druckkopf 3 in Ausgangslage zurück gefahren ist befinden sich alle Komponenten wieder in Anfangsposition. Dies ist in Figur 1h dargestellt, die der Figur 1a entspricht.

Der Druckprozess des Bindemittels auf das Partikelmaterials 1 kann schon während oder auch nach dem Beschichten erfolgen.

Die Schritte 1a bis 1h wiederholen sich bis das Bauteil, eingebettet in losem Partikelmaterial, über die gesamte Höhe gedruckt wurde.

Das Bauteil wird ausreichende Zeit im Pulverbett gelassen, bis es ein genügende Festigkeit besitzt.

Danach kann es herausgenommen und von anhaftenden Pulverresten gereinigt werden.

Das Bauteil kann durch geeignete Prozesse nachbehandelt werden.

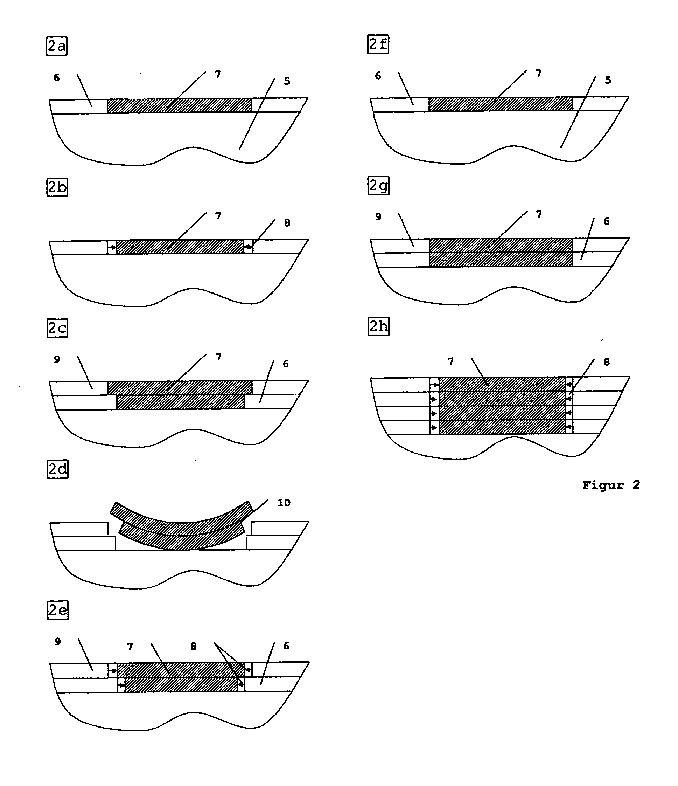

Bezugnehmend auf Figur 2 wird im Folgenden die Auswirkung von Schwund bei verschiedenen Verfestigungsgeschwindigkeiten dargestellt.

Es wird abwechselnd Partikelmaterial 5 und Binder auf einer Schicht 6 aufgetragen. Der bedruckte Bereich 7 zieht sich in Folge des Schwunds 8 zusammen. In Figur 2a bis 2e wird gezeigt, dass zu schnelle Verfestigung - und damit Schwindung - zu einem Geometrieverzug im fertigen Bauteil führt. Im Sinne dieser Erfindung kann dies durch gezielte Verzögerung der Verfestigungszeit wie in Figur 2f bis 2h vermieden werden.

Zunächst wird eine Schicht 6 aus Partikelmaterial 5 mit Binder im Bereich 7 bedruckt. Dies ist in Figur 2a dargestellt.

Der bedruckte Bereich 7 schwindet 8 in Folge schneller Verfestigung. Dies ist in Figur 2b dargestellt.

Eine zweite Schicht 9 aus Partikelmaterial wird aufgetragen und bedruckt 7. Dies wird in Figur 2c gezeigt.

Auch diese Schicht 9 schwindet nun. Da beide Schichten mit einander verbunden sind wird Kraft auf die untere Schicht 6 ausgeübt.

Weist diese Schicht 6 eine genügende Festigkeit auf, wirken sich die Spannungen innerhalb der Schichten als Wölbung 10 aus. Dies ist in Figur 2d dargestellt.

Die daraus hervorgehenden Bauteile zeigen diesen gewölbten Verzug auf.

Ist die untere Schicht noch weich, werden die Spannungen durch plastische Verformung 8 ausgeglichen. Dies ist in Figur 2e dargestellt.

Da sich dieser Fehler über viele Schichten hinweg aufsummiert, weisen die daraus hervorgehenden Bauteile schräge Seitenflächen auf.

Der Modellaufbau aus Schichten 6 geschieht bei der Verwendung verzögerter Bindersysteme gleich. Jedoch findet zwischen den Schichten keine Verfestigung und somit keine Schwindung des bedruckten Bereichs 7 statt. Dies ist in Figur 2f und 2g dargestellt.

Die Verfestigung und der Schwund 8 tritt erst verzögert nach dem Modellaufbau statt. Somit schwinden alle Bereiche des Bauteils quasi-gleichzeitig und gleichmäßig. Es tritt kein Verzug auf. Dies ist in Figur 2h dargestellt.

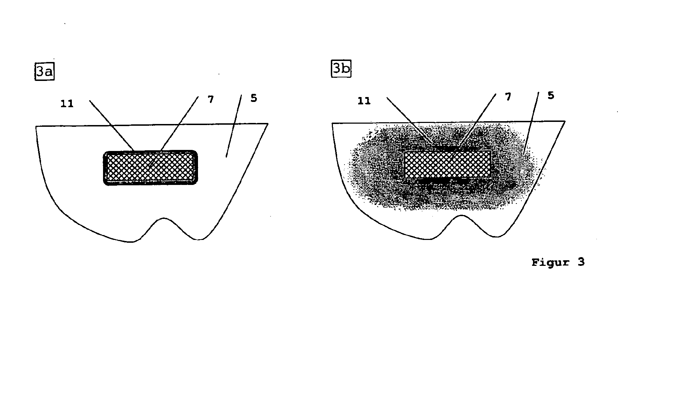

Bezug nehmend auf Figur 3 werden im Folgenden die Vorgänge beim Trocknen und der Verfestigung eines auf Lösungsmittel basierten Binders gemäß einer bevorzugten Ausführungsform des erfindungsgemäßen Verfahrens dargestellt.

Das Partikelmaterial weist gemäß der gezeigten bevorzugten Ausführungsform Polyethylmethacrylat und das Bindemittel 1-Pentanol auf.

Das Bauteil wird, wie bereits beschieben, schichtweise aufgebaut und gemäß eine bevorzugten Ausführungsform das fertige Bauteil, eingebettet in loses Partikelmaterial 5, zum Trocknen im Pulverbett belassen.

In Figur 3a wird gezeigt, dass bei zu großen Mengen an nicht-löslichen Füllstoffen im Partikelmaterial 5 die Trocknung nicht vollständig stattfinden kann. Da der Lösungsmitteltransport aus dem Bauteil hauptsächlich über die Kontaktpunkte von Partikel zu Partikel im umliegenden Pulverbett stattfindet erschweren die nicht-löslichen Partikel den Lösungsmittelfluss 12 bis die Diffusion nach einigen mm zu erliegen kommt. Das Pulver in diesem Bereich 11 ist weitestgehend gesättigt und nimmt kein weiteres Lösungsmittel aus dem Bauteil 7 auf.

Bei einem System aus Polyethylmethacrylat-Partikelmaterial und Polymethylmethacrylat-Füllstoff und einem Binder auf Pentanol-Basis die Sättigung nach ca. 5 Stunden erfolgt. Die Dicke der Randschicht beträgt ca. 2 mm.

Befindet sich ausreichend lösliches Partikelmaterial um das Bauteil, kann das Lösungsmittel ungehindert über das umliegende Material aus dem Bauteil diffundieren und trocknet so ab. Dies ist in Figur 3b dargestellt.

Wird ein reines und lösliches Polyethylmethacrylat-Partikelmaterial ohne Füllstoff verwendet, kann dass Lösungsmittel über das umliegende Pulver aus dem Bauteil entweichen. Es trocknet binnen 24 Stunden fast vollständig aus.

Dies kann auch dadurch erreich werden, dass ein stärkeres Lösungsmittel als Binder verwendet wird, so dass auch der Füllstoff angequollen wird und Binder aufnehmen und leiten kann.

| Nr. | Komponente | | Gewichtsanteil /[%] |
|---|---|---|---|
| **(5)** | **Partikelmaterial** | | |
| (12) | Grundmaterial | | |
| | | PMMA-Perlpolymerisat | 2-100 |
| (13) | Initiator | | |
| | | Benzoylperoxid (gelöst im Grundmaterial) | 0,1-5 |
| (14) | Füllstoff | | |
| | | z.B. Metallpulver, Glas-/Kohlefasern, unlösliches Polymer | 5-98 |
| | | | |

| **(22)** | | **Binder** | |
|---|---|---|---|
| (15) | Monomere | | |
| (15a) | | Styrol | 0-75 |
| (15b) | | Hydoxyethylmethacrylat | 25-100 |
| (16) | Vernetzer | | |
| | | Polyethylenglykol-dimethacrylat | 0-50 |
| (17) | Beschleuniger/Katalysator | | |
| | | N,N-Dimethyl-p-Toluidin | 0,5-1,5 |
| (18) | Verzögerer | | |
| | | p-Benzochinon | 0-0,3 |

| | | | |
|---|---|---|---|
| Tabelle 1a | | | |

1b

I (13) → 2 R^{•} (19)

1c

   R^{•} (19) + M (15) → RM^{•} (20)
1d

   RM^{•} (20) + n M (15) → RMₙ₊₁^{•}
1e

   Kombination: RMₙ^{•} + RMₘ^{•} → RMₙ₊ₘR (21)

   Disproportionierung: RMₙ^{•} + RMₘ^{•} → RMₙ + RMₘ (21)

Bezugnehmend auf Tabelle 1a und die Reaktionsgleichungen 1b bis e werden im Folgenden die Vorgänge beim Vernetzen und der Verfestigung eines auf radikalischer Polymerisation basierten Binders gemäß einer bevorzugten Ausführungsform des erfindungsgemäßen Verfahrens dargestellt.

Insbesondere soll dabei von dem Partikelmaterial auf Basis von Polymethylmethacrylat und einem Binder auf Basis verschiedener Methacrylate und/oder Styrole ausgegangen werden. Die Zusammensetzung eines solchen Pulver / Flüssigkeitssystems ist in Figur 4a dargestellt.

Das Bauteil wird, wie bereits beschrieben, schichtweise aus einem Partikelmaterial und dem Binder aufgebaut.

Sobald der Binder aus dem Druckkopf auf das Partikelmaterial im Pulverbett trifft, beginnen die Interaktionen zwischen den verschiedenen Komponenten des Systems.

Zunächst wird das Grundmaterial 12 angelöst. Dabei wird der sich im Grundmaterial 12 befindliche Initiator 13 aus dem Korn geschwemmt. Die Geschwindigkeit dieses Prozessschritts ist von der Löslichkeit des Grundmaterials 12 und die Lösungsstärke des Binders 22 ab. Nach der in Gleichung 1b dargestellten Reaktion wird der Initiator 13 durch den Beschleuniger 17 gespalten und bildet Radikale 19.

Diese Radikale spalten die Doppelbindung eines Monomers 15 und reagieren zu einem Monomerradikal 20. Dies ist in Gleichung 1c dargestellt.

Durch die Addition weiterer Monomere 15 an das Monomerradikal 20 bildet sich ein Makromolekül 21. Durch die Auswahl und Komposition des Monomers 15 kann die Geschwindigkeit der Wachstumsreaktion gesteuert werden. Die Wachstumsreaktion ist in Gleichung 1d dargestellt.

Durch die Kettenabbruchreaktion wird das Wachsen der Makromoleküle beendet. Es sind verschiedenen Abbruchmechanismen in der Literatur beschrieben. Gleichung 1e zeigt Kettenabbruch durch Kombination und Disproportionierung.

## Patentansprüche

1. Selbständig aushärtendes Materialsystem zum schichtweisen Aufbau dreidimensionaler Bauteile (7), wobei das Material zumindest ein Partikelmaterial (5) und ein getrennt aufzutragendes Bindemittel zur Verfestigung des Partikelmaterials (5) aufweist und **dadurch gekennzeichnet**, daβ eine Verfestigungsreaktion durch eine geeignete Wahl einer chemischen Zusammensetzung des Materialsystems und/oder von physikalischen Umgebungsbedingungen derart verzögert wird, dass eine Verfestierung und damit ein Schwund frühestens nach dem Auftrag von 20 Schichten auf das Bauteil einwirkt.

2. Selbstandig aushärtendes Material nach Anspruch 1, wobei eine Verfestigung des Bindemittels nach dem Aufbau des Bauteiles (7) eintritt.

3. Selbständig aushärtendes Materialsystem nach einem der vorhergehenden Ansprüche, wobei das Bauteil (7) spätestens nach 72 h eine Grünteilfestigkeit aufweist

4. Selbständig aushärtendes Materialsystem nach einem der vorhergehenden Ansprüche, wobei der Binder zumindest einen Bestandteil der Gruppe umfassend aufweisend Acrylate, Methacrylate und oder Styrole aufweist.

5. Selbständig aushärtendes Materialsystem nach einem der vorhergehenden Ansprüche, wobei das Partikelmaterial (5) Polymethylmethacrylat aufweist.

6. Selbständig aushärtendes Materialsystem nach einem der vorhergehenden Ansprüche, wobei das Bindemittel mittels UV-Licht, Strahlung, Wärme und/oder reaktive Aktivatoren polymerisiert werden kann.

7. Selbständig aushärtendes Materialsystem nach einem der vorhergehenden Anspruche, wobei der Binder ein Mehrkomponentenklebesystem umfasst.

8. Selbständig aushärtendes Materialsystem nach einem der vorhergehenden Ansprüche, wobei das Bindemittel Polyurethanharze oder Epoxidharze aufweist.

9. Selbständig aushärtendes Materialsystem nach einem der vorhergehenden Ansprüche, wobei der Binder zumindest einen Teil des Partikelmaterials (5) anlöst.

10. Selbständig aushärtendes Materialsystem nach einem der vorhergehenden Ansprüche, wobei der Binder weitere Zusätze zur Verbesserung der Verdruckbarkeit, wie beispielsweise Erhöhung oder Senkung der Viskosität und/oder der Oberflächenspannung aufweist.

11. Selbständig aushärtendes Materialsystem nach einem der vorhergehenden Ansprüche, wobei das Partikelmaterial (5) Füllstoffe aufweist.

12. Verfahren zum schichtweisen Aufbau dreidimensionaler Bauteile (7), wobei ein Partikelmaterial (5) und ein Bindemittel zur selbständigen Verfestigung des Partikelmaterials (5) schichtweise aufgetragen werden,**dadurch gekennzeichnet**, dab eine Verfestigungsreaktion durch eine geeignete Wahl einer chemischen Zusammensetzung des Materialsystems und/oder von physikalischen Umgebungsbedingungen derart verzögert wird, dass eine Verfestigung und damit ein Schwung frühestens nach dem Auftrag von 20 Schichten auf das Bauteil einwirkt.

13. Verfahren nach Anspruch 12, wobei das Bauteil (7) spätestens nach 72 h eine Grünteilfestigkeit aufweist.

14. Verfahren nach einem der Ansprüche 12 oder 13, wobei die Verfestigungsdauer mittels einer Prozesstemperatur gesteuert wird.

15. Verfahren nach einem der vorhergehenden Ansprüche 12 bis 14, wobei eine Polymerisierung des Binders mittels UV-Licht, Strahlung, Wärme und/oder reaktiven Aktivatoren durchgeführt wird.

## Claims

1. A self-curing material system for the layered construction of three-dimensional parts (7), said material comprising at least a particulate material (5) and a separately applicable binding agent for solidifying the particulate material (5) and being **characterised in that** a solidifying reaction is delayed by suitable selection of a chemical composition of the material system and/or of ambient physical conditions such that solidification, and thus shrinkage, acts on the part no sooner than after application of 20 layers.

2. The self-curing material system according to claim 1, wherein solidification of the binding agent occurs after construction of the part (7).

3. The self-curing material system according to any one of the preceding claims, wherein the part (7) exhibits green strength after no more than 72h.

4. The self-curing material system according to any one of the preceding claims, wherein the binding agent comprises at least one constituent from the group comprising acrylates, methacrylates, and/or styrenes.

5. The self-curing material system according to any one of the preceding claims, wherein the particulate material (5) comprises polymethyl methacrylate.

6. The self-curing material system according to any one of the preceding claims, wherein the binding agent can be polymerised by means of UV light, radiation, heat and/or reactive activators.

7. The Self-curing material system according to any one of the preceding claims, wherein the binding agent comprises a multi-component adhesive system.

8. The self-curing material system according to any one of the preceding claims, wherein the binding agent comprises polyurethane resins or epoxy resins.

9. The self-curing material system according to any one of the preceding claims, wherein the binding agent solubilises at least part of the particulate material (5).

10. The self-curing material system according to any one of the preceding claims, wherein the binding agent comprises further additives designed to improve runability, e.g. by increasing or decreasing viscosity and/or surface tension.

11. The self-curing material System according to any one of the preceding claims, wherein the particulate material (5) comprises fillers.

12. A method for the layered construction of three-dimensional parts (7), wherein a particulate material (5) and a binding agent are applied in layers for self-curing of the particulate material (5), **characterised in that** a solidifying reaction is delayed by suitable selection of a chemical composition of the material system and/or of ambient physical conditions such that solidification, and thus shrinkage, acts on the part no sooner than after application of 20 layers.

13. The method according to claim 12, wherein the part (7) exhibits green strength after no more than 72h.

14. The method according to any one of claims 12 or 13, wherein the solidification time is controlled by means of a process temperature.

15. The method according to any one of claims 12 to 14, wherein polymerisation of the binding agent is effected by means of UV light, radiation, heat and/or reactive activators.

## Revendications

1. Système à matériau auto-durcissant pour la constitution par couches de composants tridimensionnels (7), ledit matériau comprenant au moins un matériau en particules (5) et un agent liant à appliquer séparément pour la solidification du matériau en particules (5) et étant **caractérisé en ce qu'**une réaction de solidification est retardée par sélection appropriée d'une composition chimique dudit système et/ou de conditions physiques ambiantes de sorte qu'une solidification, et par conséquent un rétrécissement, n'agissent sur le composant qu'après application de 20 couches

2. Système à matériau auto-durcissant selon la revendication 1, dans lequel une solidification de l'agent liant se produit après la constitution dudit composant (7).

3. Système à matériau auto-durcissant selon l'une quelconque des revendications précédentes, dans lequel ledit composant (7) présente une résistance à vert après 72h au plus tard.

4. Système à matériau auto-durcissant selon l'une quelconque des revendications précédentes, dans lequel l'agent liant comprend au moins un constituant du groupe comprenant les acrylates, les méthacrylates et/ou les styrènes.

5. Système à matériau auto-durcissant selon l'une quelconque des revendications précédentes, dans lequel le matériau en particules (5) comprend le polyméthyl méthacrylate.

6. Système à matériau auto-durcissant selon l'une quelconque des revendications précédentes, dans lequel l'agent liant peut être polymérisé par lumière ultraviolette, par rayonnement, par chaleur et/ou par des activeurs réactifs.

7. Système à matériau auto-durcissant selon l'une quelconque des revendications précédentes, dans lequel l'agent liant comprend un système adhésif à plusieurs composants.

8. Système a matériau auto-durcissant selon l'une quelconque des revendications précédentes, dans lequel l'agent liant comprend des résines de polyuréthane ou des résines époxy.

9. Système à matériau auto-durcissant selon l'une quelconque des revendications précédentes, dans lequel l'agent liant solubilise le matériau en particules (5) au moins partiellement.

10. Système à matériau auto-durcissant selon l'une quelconque des revendications précédentes, dans lequel l'agent liant comprend des additions supplémentaires destinées à améliorer la roulabilité, par exemple par augmentation ou réduction de la viscosité et/ou de la tension superficielle.

11. Système à matériau auto-durcissant selon l'une quelconque des revendications précédentes, dans lequel le matériau en particules (5) comprend des charges.

12. Procédé de constitution par couches de composants tridimensionnels (7), dans lequel un matériau en particules (5) et un agent liant sont appliqués par couches pour l'auto-durcissement du matériau en particules (5), **caractérisé en ce qu'**une réaction de solidification est retardée par sélection appropriée d'une composition chimique dudit système et/ou de conditions physiques ambiantes de sorte qu'une solidification, et par conséquent un rétrécissement, n'agissent sur le composant qu'après application de 20 couches.

13. Procédé selon la revendication 12, dans lequel ledit composant (7) présente une résistance à vert après 72h au plus tard.

14. Procédé selon l'une quelconque des revendications 12 ou 13, dans lequel la durée de solidification est contrôlée au moyen d'une température de processus.

15. Procédé selon l'une quelconque des revendications 12 à 14, dans lequel une polymérisation de l'agent liant s'effectue par lumière ultraviolette, par rayonnement, par chaleur et/ou par des activeurs réactifs.
